# EUROPÄISCHE PATENTANMELDUNG

(11) **EP 1 941 965 A1**
(43) Veröffentlichungstag der Anmeldung: **09.07.2008**
(21) Anmeldenummer: 07000142.5
(22) Anmeldetag: 04.01.2007
(51) Int. Cl.: B23K 26/04, B23K 26/38, B23K 15/00, B23K 15/08, B23P 6/00

(54) **Wiederöffnen von Löchern mittels Thermographie und Bauteil**

(71) Anmelder: SIEMENS AKTIENGESELLSCHAFT, 80333 München (DE)
(72) Erfinder: Beck, Thomas, 16341 Panketal (DE); Bostanjoglo, Georg, Dr., 12161 Berlin (DE); Körtvelyessy, Daniel, 13469 Berlin (DE); Reiche, Ralph, 13465 Berlin (DE)

(57) **Zusammenfassung**

Das Verhindern des Verschließens von vorhandenen Löchern in einem Bauteil beim Beschichten des Bauteils kann durch Zeit und aufwendige Verfahren reduziert werden.

Die Erfindung nutzt ein thermographisches Verfahren, um die zu bearbeiteten Stellen zu detektieren, so dass ein Laser diese detektierten Stellen bearbeiten kann.

## Beschreibung

Die Erfindung betrifft ein Verfahren zum Erkennen von überbeschichteten Löchern und deren Wiederöffnung und eine Vorrichtung.

Bauteile, wie z.B. Turbinenschaufeln, weisen Filmkühllöcher auf, die bei der Neuherstellung durch eine äußere keramische Schicht durch ein Substrat hindurch erzeugt werden. Nachdem die Turbinenschaufel im Einsatz war, werden die Schichten entfernt und erneut neu aufgetragen. Dabei sind aber schon die durchgehenden Löcher im Substrat vorhanden. Diese können zwar aufwendig maskiert werden, um den "Coat down"-Effekt zu verhindern. Dies ist jedoch zeit- und kostenintensiv. Eine andere Möglichkeit besteht darin, den Overspray, also ein Überdecken des Filmkühllochs oder ein teilweises Beschichten des Filmkühllochs zuzulassen und dieses nicht gewünschte Material durch manuelle Bearbeitung oder sonstige Verfahren zu entfernen. Auch dies ist sehr kosten- und zeitintensiv.

Es ist daher Aufgabe der Erfindung ein Verfahren aufzuzeigen, bei dem das oben genannte Problem überwunden werden kann.

Die Aufgabe wird gelöst durch ein Verfahren gemäß Anspruch 1 und eine Vorrichtung gemäß Anspruch 18.

In den Unteransprüchen sind weitere vorteilhafte Maßnahmen aufgelistet, die beliebig in vorteilhafter Art und Weise miteinander kombiniert werden können.

Es zeigen
- Figur 1, 3: schematisch eine Anordnung zur Durchführung des erfindungsgemäßen Verfahrens,
- Figur 2, 4: ein Teil eines Bildes, das bei dem Verfahren in einem Zwischenschritt erzeugt wird,
- Figur 5, 6: Bearbeitungssysteme,
- Figur 7, 8: Abläufe des erfindungsgemäßen Verfahrens,
- Figur 9: eine Gasturbine,
- Figur 10: perspektivisch eine Turbinenschaufel und
- Figur 11: perspektivisch eine Brennkammer.

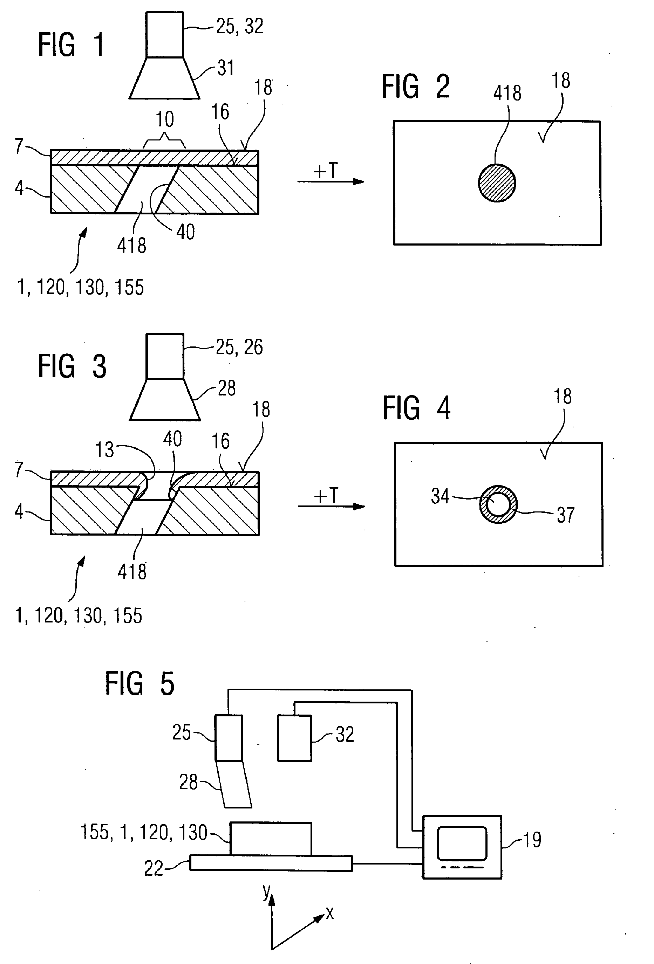

Figur 1 zeigt ein Bauteil 1 im Querschnitt, das mit dem Verfahren bearbeitet wird.

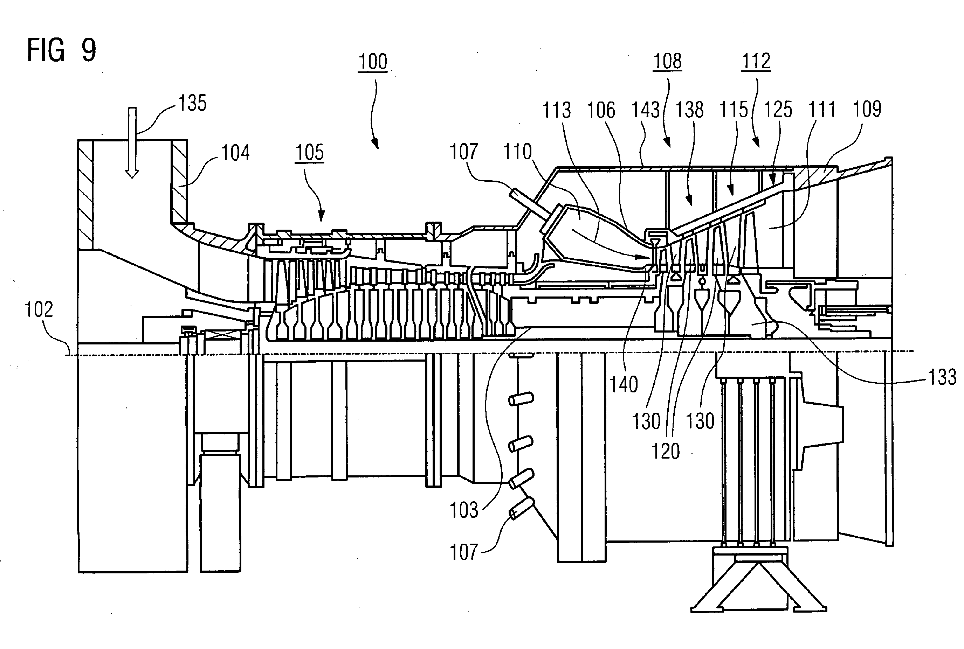

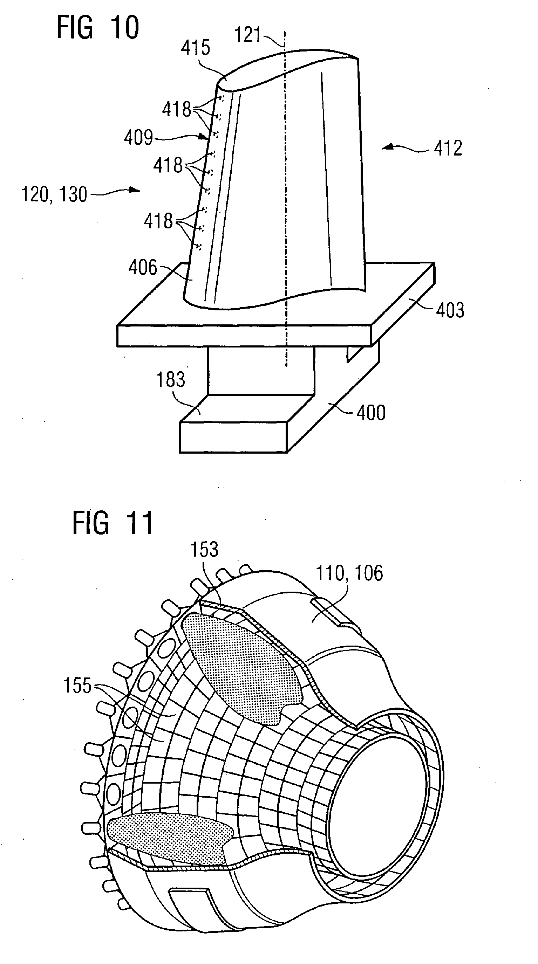

Das Bauteil 1 ist beispielsweise ein Turbinenbauteil, insbesondere eine Turbinenschaufel 120, 130 (Figur 9, 10), das Filmkühllöcher 418 aufweist oder ein Hitzeschildelement 155 (Fig. 11). Die Filmkühllöcher 418 sind entweder schon bei der Neuherstellung (Gießen) vorhanden, nach dem Gießen eingebracht worden oder die Löcher sind im bereits benutzten Bauteil 120, 130, 155, das wieder aufgearbeitet wird (Refurbishment), vorhanden.

Dabei wird auf die Oberfläche 16 eines Substrats 4 eine Schicht 7 aufgebracht, die eine Oberfläche 18 aufweist. Dies ist insbesondere für die nickel- oder kobaltbasierten Superlegierungen der Turbinenbauteile 120, 130, 155 (Figur 9) eine Schicht aus MCrAlX und/oder eine keramische Beschichtung. Diese Beschichtung 7 kann das Filmkühlloch 418 in unerwünschter Weise vollständig (Fig. 1) bedecken, so dass es einen Deckel 10 bildet, wobei aber auch Material der Schicht 7 auf den Innenflächen des Filmkühllochs 418 vorhanden sein kann. Ebenso kann auch kein Deckel vorhanden sein, sondern das Material ragt in das Filmkühlloch 418 hinein, wie es in Figur 3 dargestellt ist.

In einem ersten Schritt werden die Bereiche 10, 13, hier allgemein Overspray genannt, erfasst.

Dies erfolgt mittels eines thermographischen Verfahrens, bei dem die Effusionsunterschiede in der Wärmverteilung unter der Beschichtung 7, 10, 13 detektierbar sind und erfasst werden.

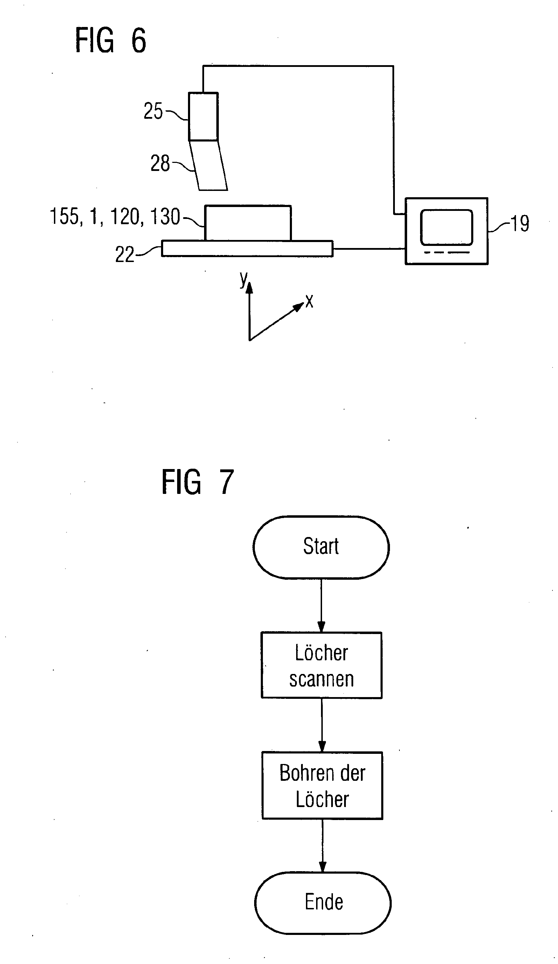

Die Konturen der Filmkühllöcher 418 werden mit mathematischen Verfahren digital erfasst und in einem Computersystem 19 (Fig. 5, 6) in Koordinaten umgewandelt, gespeichert und an ein Bearbeitungssystem (19, 22, 25), insbesondere ein Lasersystem, zur Bearbeitung weitergegeben.

In Figur 2 ist ein solches Wärmebild der Figur 1 dargestellt. Der dunkle Bereich stellt den Bereich da, bei dem eine geringere Wärmeableitung vorhanden ist, da der Deckel 10 sich über einen Hohlraum befindet. Die um das Filmkühlloch 418 liegende Schicht 7 liegt auf einem massiven Material 4 auf und kühlt schneller ab. Die Lage des Lochs 418 wird elektronisch im Bearbeitungssystem 19 erfasst.

Im Falle der Figur 3 wird ein verengter Bereich 34 detektiert, der ein durchgängiges Loch 418 darstellt und ein etwas unscharfer Bereich 47 (Fig. 4), der durch den Materialauftrag 13 auf den Innenflächen 40 des Filmkühllochs 418 entsteht.

Der Wärmeeintrag in die Beschichtung 7 durch Bestrahlung der äußeren Oberfläche 18 des Bauteils 1, 120, 130, 155 zum Zwecke der Detektion der Löcher 418 kann zum einen durch die so genannte Blitzangeregte Thermographie oder vorteilhaft durch den Laser, der später zur Bearbeitung verwendet wird, selbst geschehen.
Bei der Blitzthermographie wird die Wärme über einen oder mehrere energiereiche Lichtblitze 31 in die Schicht 7 des Bauteils 1, 120, 130 eingekoppelt.
Zur Einkopplung der Wärme eines Lasers 25 muss der Laser 25 mit geringerer Flächenleistung über die Bauteiloberfläche geführt werden, wobei weder die Schicht 7 noch das Bauteil 120, 130, 155 beschädigt werden. Dazu kann natürlich auch das Lasersystem 22, 25, welches danach zur Bearbeitung eingesetzt wird, verwendet werden (Fig. 6).
Vorzugsweise sollte die Größe des Fokus des Laserstrahls 28 so eingestellt werden, dass mit einem Laserpuls der gesamte zu entfernende Bereich eines Lochs 418 sowie die nähere Umgebung um das Loch 418 beleuchtet, d.h. erwärmt werden kann. Dabei können vorzugsweise zuerst alle zu bearbeitenden Stellen 10, 13 detektiert und danach bearbeitet.
Der Laser 25 wird von einem Lasersystem 19 gesteuert, der nun die Koordinaten der zur bearbeiteten Stellen 10, 13 mitgeteilt bekommen hat und daher kennt und den Laser 25 so ansteuert, dass er den Deckel 10 oder den Überhang 13 entfernt.

Bei dem Laser 25 können gepulste Laser im Milli- oder Nanosekundenbereich eingesetzt werden. Dies hat eine besonders schonende Abtragung zur Folge oder das größere Schichtbereiche abplatzen. Laserimpulse im Millisekundenbereich werden zur Grobbearbeitung eingesetzt, wobei Laserpulse im Nanosekundenbereich zur Feinbearbeitung, insbesondere zur Einstellung der Endkontur verwendet werden.

Dabei kann der Deckel 10 herausgeschnitten oder schichtweise in Lagen abgetragen werden.

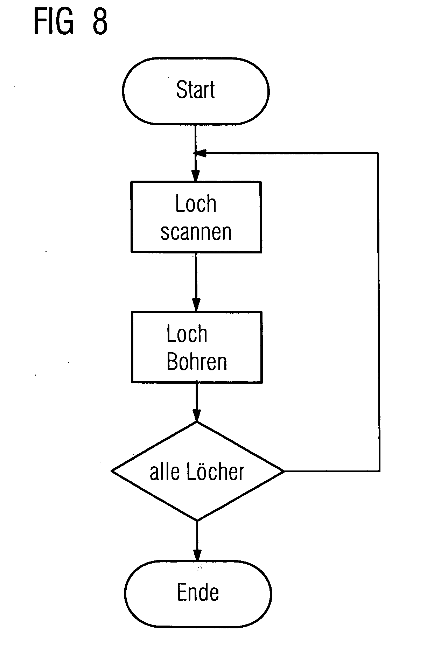

Ebenso ist es möglich, dass nicht zuerst alle zu bearbeitenden Stellen 10, 13 erfasst werden (Fig. 7), sondern dass das System erkennt, dass ein zu bearbeitender Bereich detektiert wurde und dieser dann direkt bearbeitet wird (Fig. 8). Dies macht insbesondere dann Sinn, wenn die Erwärmung und die Bearbeitung durch einen Laser 25 erfolgt.
Die Bearbeitung der Stellen 10, 13, aber auch die Erwärmung, kann auch durch Elektronenbestrahlung erfolgen.

Im Ablauf gemäß Figur 8 wird der Vorgang der Locherkennung und Bearbeitung solange durchgeführt, bis alle Löcher gescannt wurden.
Dem Bearbeitungssystem kann grob die Lage oder die Anzahl der vorhandenen Löcher des zu bearbeitenden Bauteils vorgegeben werden, so dass das System erkennt, wann alle Löcher 418 überprüft wurden oder es wird die gesamte Oberfläche des Bauteils 1, 120, 130 abgescannt, so dass dadurch auch zwangsläufig alle Löcher 418 des Bauteils erfasst werden.

Die Figur 9 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 10 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 11 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Wiederöffnung eines Lochs
in einem Bauteil (1, 120, 130, 155) mit einer Schicht (7), insbesondere von Durchgangslöchern (418),
dessen Material (10, 13) sich teilweise in und/oder über dem Loch (418) befindet,
bei dem ein Thermographieverfahren genutzt wird,
um die zu bearbeitenden Stellen (10, 13) zu detektieren und bei dem Energiestrahlen (28) genutzt werden,
um die detektierten Stellen (10, 13) zu bearbeiten.

2. Verfahren nach Anspruch 1,
bei dem Laserstrahlen (28) als Energiestrahlen (28) zur Bearbeitung der Stellen (10, 13) verwendet wird.

3. Verfahren nach Anspruch 1,
bei dem Elektronenstrahlen (28) als Energiestrahlen (25) zur Bearbeitung der Stellen (10, 13) verwendet werden.

4. Verfahren nach Anspruch 1, 2 oder 3,
bei dem der Wärmeeintrag für das Thermographieverfahren über eine Lichtblitzanregung (31) der Schicht (7) erzeugt wird.

5. Verfahren nach Anspruch 1, 2 oder 3,
bei dem der Wärmeeintrag für das Thermographieverfahren durch Laserbestrahlung (28) der Schicht (7) erzeugt wird.

6. Verfahren nach Anspruch 1, 2 oder 3,
bei dem der Wärmeeintrag für das Thermographieverfahren durch Elektronenbestrahlung der Schicht (7) erzeugt wird.

7. Verfahren nach Anspruch 1, 2, 3, 5 oder 6,
bei dem für das Thermographieverfahren und zur Bearbeitung der zu bearbeitenden Stellen (10, 13) die gleiche Energiestrahlart (28) verwendet wird.

8. Verfahren nach Anspruch 1, 2, 3, 4, 5, 6 oder 7,
bei dem ein Thermographieverfahren verwendet wird,
um Unterschiede in der Wärmeverteilung des Bauteils (1, 120, 130, 155) zu detektieren,
die an ein System (19) weitergegeben werden,
das ein Bearbeitungssystem (22, 25) so steuert,
dass die zu bearbeitenden Stellen (10, 13) erkannt und bearbeitet werden.

9. Verfahren nach einem oder mehreren der vorherigen Ansprüche,
bei dem ein gepulster Laser (25),
insbesondere im Milli- oder Nanosekundenbereich,
verwendet wird,
um Material an den detektierten Stellen (10, 13) zu entfernen.

10. Verfahren nach Anspruch 1,
bei dem ein Filmkühlloch (418) bearbeitet wird.

11. Verfahren nach Anspruch 10,
bei dem Material (13) auf Innenflächen des Filmkühllochs (418) entfernt wird.

12. Verfahren nach Anspruch 10 oder 11,
bei dem Material (10) über dem Filmkühlloch (418) entfernt wird.

13. Verfahren nach einem oder mehreren der vorherigen Ansprüche,
bei dem die Größe des Fokus des Laserstrahls (28) größer ist als die Querschnittsfläche eines Filmkühllochs (418) an der Oberfläche (18) des Bauteils (1, 120, 130, 155).

14. Verfahren nach einem oder mehreren der vorherigen Ansprüche,
bei dem ein zu entfernender Bereich (10, 13) detektiert wird,
insbesondere durch Erwärmung durch einen Laser (25),
der (10, 13) dann unmittelbar bearbeitet wird,
insbesondere durch Bearbeitung eines Lasers (25).

15. Verfahren nach einem oder mehreren der vorherigen Ansprüche,
bei dem alle zu entfernenden Bereiche (10, 13) zuerst detektiert werden und danach bearbeitet werden.

16. Verfahren nach Anspruch 1, 13, 14 oder 15,
bei dem der zu entfernende Bereich (10) herausgeschnitten wird.

17. Verfahren nach Anspruch 1, 13, 14 oder 15,
bei dem der zu entfernende Bereich (10, 13) schichtweise abgetragen wird.

18. Vorrichtung zum Öffnen eines Lochs in einem Bauteil (1,
120, 130, 155)
umfassend:
ein Positionierungssystem (22),
das das Bauteil (1, 120, 130, 155) in x/y-Richtung oder auch in z-Richtung verfahren kann,
ein Computersystem (19),
das mit einem Thermographiegerät (32) verbunden ist,
das die zu bearbeitenden Stellen (10, 13) detektiert und
ein Bearbeitungssystem (25) zum Entfernen von Material.

19. Vorrichtung nach Anspruch 18,
die ein Laser (25) umfasst.

20. Vorrichtung nach Anspruch 18,
die ein Elektronenstrahlerzeuger (26) umfasst.
